# EUROPÄISCHE PATENTSCHRIFT

(11) **EP 1 747 107 B1**
(45) Veröffentlichungstag und Bekanntmachung des Hinweises auf die Patenterteilung: **11.02.2009**
(21) Anmeldenummer: 05745361.5
(22) Anmeldetag: 04.05.2005
(51) Int. Cl.: B60H 1/00

(54) **HEIZUNGS- UND/ODER KLIMATISIERUNGSEINRICHTUNG FÜR FAHRZEUGE**
HEATING AND/OR AIR CONDITIONING UNIT FOR VEHICLES
DISPOSITIF DE CHAUFFAGE ET/OU DE CLIMATISATION POUR VEHICULES

(30) Priorität: 13.05.2004 DE 102004024182
(43) Veröffentlichungstag der Anmeldung: 31.01.2007
(73) Patentinhaber: Behr GmbH & Co. KG, 70469 Stuttgart (DE)
(72) Erfinder: BOPP, Alexander, 75428 Illingen (DE); BURKHARDT, Carsten, 74653 Künzelsau (DE); SCHWEIZER, Gebhard, 71229 Leonberg (DE)
(86) Internationale Anmeldenummer: PCT/EP2005/004850
(87) Internationale Veröffentlichungsnummer: WO 2005/110782

(56) Entgegenhaltungen:
- EP-A- 1 336 516
- US-A- 5 080 140
- US-A- 5 228 475
- US-B1- 6 231 437

## Beschreibung

Die vorliegende Erfindung betrifft eine Heizungs- und/oder Klimatisierungseinrichtung für Fahrzeuge.

Eine Heizungs- und/oder Klimatisierungseinrichtung für ein Fahrzeug setzt sich typischerweise aus einem ein- oder mehrteiligen Gehäuse, einem Gebläse zur Ansaugung von Frisch- oder Umluft, gegebenenfalls einem Wärmetauscher, insbesondere einem Verdampfer zur Kühlung der Luft, einem zweiten Wärmetauscher zur Erwärmung der Luft, einer Vorrichtung zur Temperierung eines Hauptluftstroms und einem Mischraum zusammen.

Ein vom Verdampfer austretender gekühlter Luftstrom oder ein Frischluftstrom wird vorzugsweise als ein erster Teilluftstrom entweder über einen Kaltluftkanal oder direkt in eine Mischkammer geleitet und als ein zweiter Teilluftstrom über einen weiteren Kanal oder einen Verbindungsabschnitt, einem Wärmetauscher, der als Heizkörper ausgeführt ist, zugeführt. Der über den Heizkörper geleitete zweite Teilluftstrom tritt als erwärmter Luftstrom in den Mischraum ein und bildet nach Vermischung mit zumindest einem Teil des ersten, kalten, Teilluftstroms einen Hauptluftstrom.

Ausgehend von dem Mischraum oder der Mischkammer, versorgt der Hauptluftstrom über verschiedene Luftaustrittsöffnungen den Fahrzeuginnenraum. Diese Luftaustrittsöffnungen oder Ausströmer, wie zum Beispiel Defrostluft-, Mittelluft-, Seitenluft- oder Fußraumluftausströmer sind über weitere Steuerklappen luftmengenmäßig unterschiedlich beaufschlagbar.

Durch die, mittels einer Vorrichtung zur Temperierung der Luft einstellbaren, unterschiedlichen Volumenströme aus kalten und erwärmten Teilluftströmen, ergibt sich die Temperatur des Hauptluftstroms bzw. der Luft in der Mischkammer. Eine solche Vorrichtung zur Temperierung eines Hauptluftstroms, der von der Mischkammer in unterschiedliche Bereiche oder auch Zonen des Fahrzeuginnenraums geleitet wird, besteht meist aus einer Temperaturmischklappe oder aus einer Anordnung solcher Mischklappen. Mittels unterschiedlicher Betriebsstellungen einer solchen Mischklappe, ist eine gezielte Beeinflussung oder Steuerung der Beaufschlagung verschiedener Luftströmungskanäle möglich. Insbesondere können Volumenstromverhältnisse zweier unterschiedlich temperierter Luftströme eingestellt werden, um nach dem Zusammenführen oder Mischen dieser beiden oder mehrerer Luftströme, eine definierte Temperatur zu erzielen.

Aus dem Stand der Technik, beispielsweise aus der Patentschrift DE 3038272 C2, sind für solche Temperaturmischklappen so genannte Schmetterlingsklappen bekannt. Diese sind zweiflügelig ausgeführt, dreh- oder verschwenkbar um eine Rotationsachse gelagert und können zwischen zwei Endpositionen bewegt werden. Dabei schließt die Klappe oder Teilbereiche der Klappe in einer ersten Endposition einen Kaltluftkanal vollständig und öffnet gleichzeitig einen Warmluftkanal, der den Luftstrom hin zu einem Heizelement führt. In einer zweiten Endposition tritt der umgekehrte Fall ein. Die Klappe verschließt den Kanal zum Heizelement vollständig und in die Mischkammer gelangt über einen Kaltluftkanal nur kalte Luft. In dazwischengelagerten Stellungen der Klappe ist der Kalt- und Warmluftkanal teilweise geschlossen bzw. geöffnet, so dass sich abhängig von der Klappenstellung eine bestimmte Temperatur in der Mischkammer, in der die beiden Teilströme vereinigt werden, einstellt.

Liegt die Klappe in einer ersten Endposition vor, in der sie beispielsweise den Kaltluftkanal verschließt, wird diese, um eine geringfügige Temperaturabsenkung der Mischluft zu erreichen um einen kleinen Winkel verdreht. An einem Endbereich des den Kaltkanal verschließenden Flügelteils der Mischklappe, wird eine schmale Öffnung zum Durchtritt von kalter Luft in die Mischkammer freigegeben. Nachteilig erweist sich dabei, dass dieser Öffnungsbereich bei einer Schmetterlingsklappe konstruktionsbedingt an dem Ende der Klappe liegt, das auf der, dem Warmluftkanal abgewandten Seite der Klappe liegt. Die gekühlte Luft streicht entlang des Randbereichs des Kaltluftkanals am Klappenende vorbei in die Mischkammer, wodurch nur eine geringe Durchmischung von warmer und kalter Luft erzielt wird. Austrittsöffnungen die diesem Randbereich benachbart sind, werden so überwiegend mit kalter Luft, weiter entfernt liegende Öffnungen fast ausschließlich mit warmer Luft beaufschlagt. Dies führt im Hinblick auf die Luftaustrittsöffnungen aus der Mischkammer zu einer oftmals unerwünschten Temperaturschichtung. Entsprechendes gilt auch für den umgekehrten Fall, bei dem der zunächst vollständig verschlossene Warmluftkanal langsam geöffnet wird.

Eine verbesserte Durchmischung der Teilluftströme erreicht man mit einer Mischklappe vom Schmetterlingstyp durch die Beabstandung der Rotationsachse bzw. der Klappenwand im Bereich der Rotationsachse von einem Randbereich oder Ende einer Trennwand zwischen Kalt- und Warmluftkanal, so dass in den, den Endstellungen zwischengelagerten Stellungen der Mischklappe ein direkter Durchtritt der Kaltluft vom Kaltluftkanal in den Warmluftkanal erfolgen kann und so schon vor Eintritt in die Mischkammer für eine bessere Durchmischung der beiden Teilluftströme gesorgt wird. Nachteilig an dieser Anordnung ist jedoch, dass durch die Ausbildung einer zweiflügeligen Klappe, sich Klappengesamtabmessungen ergeben, die durch die Summe der Öffnungsbreiten des Kalt- und Warmluftkanals bestimmt sind. Eine beispielhafte Ausführung ist in der Offenlegungsschrift DE 3510991 A1 dargestellt.

Eine Klimatisierungseinrichtung gemäß dem Oberbegriff des Anspruchs 1, mit einer Mischklappe, die diesem Problem ansatzweise Abhilfe schafft, ist aus der Patentschrift US 6231437 B1 bekannt. Die Temperaturmischklappe ist als Trömmel- oder zumindest als trommelartige Klappe ausgeführt. Ein wesentliches Merkmal einer trommelartigen Klappe ist es, dass diese eine Wandung aufweist, die kreisförmig und konvex bezüglich der Rotationsachse ausgebildet ist. Die Gesamtabmessung des Wandbereichs der für das Schließen bzw. Öffnen der Kanäle vorgesehen ist, wird nur mehr durch die maximale Öffnungsbreite des breiteren der beiden Kanäle bestimmt. In der dargestellten Ausführungsform ist die Klappe um eine Rotationsachse drehbar gelagert. Eine kreissegmentartig ausgestaltete Schließwand ist mit einem oder mehreren Durchbrüchen bzw. von der Schließwand zurückspringenden Bereichen versehen um während des Verschwenkens zwischen den Endpositionen "Kalt" und "Warm" einen direkten Durchtritt der Kaltluft vom Kaltluftkanal in den Warmluftkanal zu ermöglichen.

Durch die konvex gekrümmte Form der Klappe im Strömungsbereich der umgelenkten Kaltluft, ergibt sich eine nachteilige Wirkung auf die Strömungscharakteristik. Bei bestimmten Klappenstellungen liegt die Vorzugsrichtung des eintretenden Kaltluftstroms nahezu senkrecht zur Schließwand. Die auf die Wand auftreffende Kaltluft verwirbelt sich noch vor einem Übertritt in den Warmluftkanal. Die Schließwand, die für eine Umlenkung der Kaltluft sorgen soll, bildet somit ein Strömungshindernis. Durch den daraus resultierenden erhöhten Druckabfall verschlechtern sich auch die akustischen Eigenschaften der Klimatisierungseinrichtung.

Durch die Ausführung der Mischklappe in Form einer Trommelklappe ergeben sich Mindestanforderungen an den für die Rotationsbewegung der Klappe erforderlichen Bauraum. Eine flexible Anpassung des Verschwenkweges ist nicht möglich.

Dadurch, dass die Temperaturmischklappe im Betrieb eine reine Rotationsbewegung vollführt - dies betrifft auch die Schmetterlingsklappe - ergibt sich ein weiterer Nachteil der aus dem Stand der Technik bekannten Klappen im Bereich der Abdichtung der Klappe gegenüber dem Gehäuse an den Stirnflächen der Klappe. Üblicherweise sind Mischklappen oder Temperaturmischklappen mit Dichtflächen an deren Wandung bzw. an den Stirn- oder Seitenflächen versehen. Ist es ausreichend, dass eine Abdichtung der gesamten Klappe gegenüber dem Gehäuse nur in den Endpositionen gegeben ist, so muss hier trotzdem über den gesamten Bewegungsablauf ein entsprechendes Moment zur Überwindung der Reibung zwischen den seitlichen bzw. stirnseitigen Dichtflächen und der Gehäusewandung aufgebracht werden.

Ausgehend von diesem Stand der Technik ist es daher Aufgabe der Erfindung, eine verbesserte Klimatisierungseinrichtung bereitzustellen, die eine Temperaturmischklappe mit einem optimal auf die gewünschte Strömungs- und Luftmischungscharakteristik sowie den zur Verfügung stehenden Bauraum abgestimmten Bewegungsablauf aufweist und/oder für deren Bewegung zwischen den Endpositonen ein verringertes Drehmoment erforderlich ist.

Diese Aufgabe wird gelöst durch eine Klimatisierungseinrichtung mit den Merkmalen des Anspruchs 1. Vorteilhafte Ausgestaltungen sind Gegenstand der Unteransprüche.

Erfindungsgemäß weist eine Klimatisierungseinrichtung zum Erzeugen eines Luftstromes ein Gebläse auf. Stromabwärts dieses Gebläses ist gegebenenfalls ein Verdampfer angeordnet. Nach dem optionalen Verdampfer oder wenn dieser nicht vorhanden ist vor dem Eintritt in eine Mischkammer wird der Luftstrom in zumindest einen ersten Teilluftstrom und zumindest einen zweiten Teilluftstrom aufgeteilt. Der erste Teilluftstrom mündet direkt oder über einen ersten Strömungskanal in eine Mischkammer ein, während der zweite Teilluftstrom über einen zweiten Strömungskanal in dem ein Wärmetauscher, insbesondere ein Heizkörper angeordnet ist, stromabwärts des Wärmetauschers in die Mischkammer mündet.

In der Mischkammer ist aus dem ersten und zweiten Teilluftstrom ein Misch- oder Hauptluftstrom erzeugbar, wobei von der Mischkammer Luftaustrittskanäle in unterschiedliche Bereiche oder Zonen des Fahrzeuginnenraums führen. Den Luftaustrittskanälen wie beispielsweise, Defrost-, Mittel-, Seiten- oder Fußraumluftkanälen sind vorzugsweise zusätzliche Schaltklappen zugeordnet, welche den Luftaustrittsstrom von der Mischkammer durch die zugeordneten Luftaustrittskanäle steuern.

Eine der Temperierung des Haupt- oder Mischluftstroms dienende Mischklappe ist mit einem Wandbereich versehen, der Öffnungen im Bereich der Mischkammer wahlweise öffnen oder verschließen kann. Die erfindungsgemäße Mischklappe ist zwischen einer ersten und einer zweiten Endposition bewegbar, wobei in der ersten Endposition der Wandbereich der Mischklappe die Öffnung für den Eintritt des zumindest ersten Teilluftstroms in die Mischkammer vollständig verschließt und die Öffnung für den Eintritt des zumindest zweiten Teilluftstroms in die Mischkammer zumindest teilweise freigibt und in einer zweiten Endposition der Wandbereich der Mischklappe die Öffnung für den Eintritt des zumindest zweiten Teilluftstroms in die Mischkammer vollständig verschließt und die Öffnung für den Eintritt des zumindest ersten Teilluftstroms in die Mischkammer zumindest teilweise freigibt.

In den diesen Endpositionen zwischengelagerten Stellungen der Mischklappe ist ein direkter Durchtritt zumindest eines Teils eines ersten Teilluftstroms, beispielsweise des Kaltluftstroms in den Luftkanal des zweiten Teilluftstroms, beispielsweise in den, den Warmluftstrom führenden Warmluftkanal durch die Ausgestaltung zumindest eines Abschnitts des Wandbereichs der Mischklappe und durch eine entsprechend abstimmbare Bewegungsart der Klappe möglich.

Die Mischklappe ist zwischen den beiden Endpositionen über zumindest zwei Anlenkmittel bewegbar. Die Anlenkung der Mischklappe erfolgt dabei so, dass während der Bewegung der Mischklappe mindestens ein Teilbereich der Mischklappe oder des Wandbereichs eine aus einer Rotation und einer Translation zusammengesetzte Bewegung vollführt.

In der Erfindung sind die zumindest zwei Anlenkmittel der Mischklappe jeweils an einer bezüglich des Gehäuses der Klimatisierungseinrichtung ortsfesten Drehachse gelagert. Die Drehachsen der zumindest zwei Anlenkmittel sind voneinander beabstandet. Vorzugsweise sind die zumindest zwei Anlenkmittel der Mischklappe in Form von Hebelarmen ausgebildet. Zur Verbindung der Anlenkmittel mit der Mischklappe weist diese, Mittel zur gelenkigen Verbindung auf. Vorteilhafterweise sind zumindest zwei Anlenkmittel gleich lang ausgebildet.

Um den Bewegungsablauf der Mischklappe an unterschiedliche Anforderungen hinsichtlich des Verlaufs der Luftmischung bzw. Luftschichtung oder des zur Verfügung stehenden Bauraums anzupassen, können zumindest zwei Anlenkmittel in einer weiteren vorteilhaften Ausgestaltung der Erfindung unterschiedlich lang ausgeführt sein. Die Drehachse zumindest eines der Anlenkmittel liegt vorzugsweise im Bereich des Mischraums oder benachbart dem Gehäuse der Klimatisierungseinrichtung und die Drehachse eines zumindest zweiten Anlenkmittels liegt vorzugsweise ebenfalls im Bereich des Mischraums oder benachbart dem Gehäuse der Klimatisierungseinrichtung oder im Bereich des zumindest ersten oder zumindest zweiten Teilluftstroms.

Erfindungsgemäß erfolgt die Ausgestaltung des Wandbereichs der Mischklappe im Sinne der Anforderungen an Luftmischung und Verteilung. Die Mischklappe weist beispielsweise einen in seiner gesamten Fläche durchgehend stetigen Wandbereich auf, der im Querschnitt zumindest teilweise kreis- oder kreissegmentförmig profiliert ist.

In einer weiteren vorteilhaften Ausgestaltung der Erfindung ist der Wandbereich der Mischklappe zumindest teilweise in elliptischer, parabolischer, hyperbolischer, einer anderen stetig gekrümmten Form oder zumindest teilweise als ebenes Flächenstück ausgebildet.

Bevorzugt ist der Wandbereich der Mischklappe einstückig ausgeführt insbesondere als Kunststoffspritzgussteil.

Soll eine gute Durchmischung des zumindest ersten und zweiten Teilluftstroms, vorzugsweise eines Kalt- und Warm-Luftstroms nur bereichsweise erfolgen und bereichsweise eine Temperaturschichtung erzielt werden, so kann die Mischklappe lateral getrennte unterschiedliche Wandbereiche aufweisen. Zusätzlich ist es vorteilhaft für eine solcherart gewünschte Temperaturschichtung bereichsweise im Gehäuse der Klimatisierungseinrichtung Trennwände, korrespondierend zu den getrennten Wandbereichen der Mischklappe vorzusehen.

Um die Mischklappe in zumindest einer ihrer Endpositionsstellungen festzulegen, sind bevorzugt ein oder beide längsseitigen Enden des Wandbereichs in Form von Anschlägen oder Anschlagsflächen ausgeführt. Dieser zumindest eine Anschlag kann sich an einen Steg oder entsprechend gefertigten vor- oder rückspringenden Bereich der Gehäusewand anlegen und in zumindest einer Endposition für eine längsseitige Abdichtung eines Strömungskanals sorgen. Vorzugsweise ist der zumindest eine Anschlag mit einem dichtenden Material, beispielsweise einer elastischen Dichtlippe oder einer Schaumumspritzung, beaufschlagt.

Bevorzugt ist das Gehäuse zumindest in den Endpositionen der Mischklappe mit Dichtkanten beispielsweise in Form von Stegen oder vorspringenden Bereichen der Gehäuseinnenwand im Bereich der Stirnseiten des Wandbereichs der Mischklappe ausgebildet.

Im Übrigen wird die Erfindung nachfolgend an Hand der in den Zeichnungen dargestellten Ausführungsbeispielen näher erläutert, dabei zeigt:
- Fig. 1: eine Querschnittsdarstellung durch eine erfindungsgemäße Klimatisierungseinrichtung mit einer Mischklappe, die den Warmluftkanal vollständig verschließt; und
- Fig. 2: eine Querschnittsdarstellung durch einen Teilbereich einer erfindungsgemäßen Klimatisierungseinrichtung mit einer Temperaturmischklappe, die den Warmluftkanal vollständig verschließt; und
- Fig. 3: eine Querschnittsdarstellung durch einen Teilbereich einer erfindungsgemäßen Klimatisierungseinrichtung mit einer Temperaturmischklappe, die den Kaltluftkanal vollständig verschließt; und
- Fig. 4: eine Querschnittsdarstellung durch einen Teilbereich einen erfindungsgemäße Klimatisierungseinrichtung mit einer Temperaturmischklappe, die in einer zwischengelagerten Stellung den Frischluft- und den Warmluftkanal teilweise verschließt; und
- Fig. 5: eine Querschnittsdarstellung einer Mischklappe in einer Endposition mit einer Gehäusedichtkante; und
- Fig. 6: Querschnittsdarstellung einer Mischklappe in einer den Endpositionen zwischengelagerten Stellung mit einer Gehäusedichtkante; und
- Fig. 7: in schematischer perspektivischer Darstellung eine Mischklappe mit Anlenkelementen; und
- Fig. 8: in schematischer perspektivischer Darstellung eine Mischklappe mit Anlenkelementen und Gehäusedichtkanten; und
- Fig. 9: eine Querschnittsdarstellung durch einen Teilbereich einer erfindungsgemäßen Klimatisierungseinrichtung mit einer Temperaturmischklappe in einer zweiten Ausführungsform, die den Warmluftkanal vollständig verschließt; und
- Fig. 10: ein Querschnittsdarstellung durch einen Teilbereich einer erfindungsgemäßen Klimatisierungseinrichtung mit einer Temperaturmischklappe in einer zweiten Ausführungsform, die den Kaltluftkanal vollständig verschließt; und
- Fig. 11: eine Querschnittsdarstellung durch einen Teilbereich einen erfindungsgemäße Klimatisierungseinrichtung mit einer Temperaturmischklappe in einer zweiten Ausführungsform, die in einer zwischengelagerten Stellung den Frischluft- und den Warmluftkanal teilweise verschließt; und
- Fig. 12: in schematischer perspektivischer Darstellung eine Mischklappe in einer zweiten Ausführungsform mit Anlenkelementen.

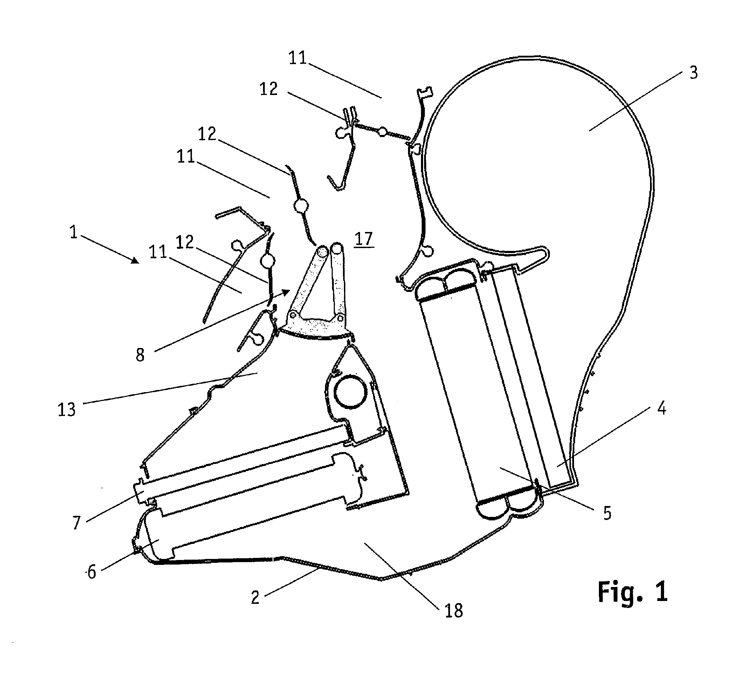

Figur 1 zeigt eine erfindungsgemäße Klimatisierungseinrichtung 1 in Querschnittsdarstellung. Innerhalb eines Bereichs des Gehäuses ist ein nicht dargestelltes Gebläse 3, vorzugsweise ein Radiallüfter, angeordnet, der in der Senkrechten zur Schnittebene Luft ansaugt. Die vom Radiallüfter geförderte Luft durchströmt zunächst einen Luftfilter 4 und dann den Verdampfer 5, in dem die Luft abgekühlt wird.

Stromabwärts des Verdampfers 4 schließt sich ein Kaltluft-Eintrittsbereich in die Mischkammeröffnung 14, über die ein Kaltluftstrom 15 in die Mischkammer 17 eintreten kann, und ein Strömungskanal 18, der als HeizkörperEintrittskanal bezeichnet wird, an. Die in den Strömungskanal 18 strömende Luft passiert stromabwärts des Verdampfers 5 einen Wärmetauscher 6, der als Heizkörper ausgeführt ist und ein Zusatzheizelement 7, beispielsweise ein PTC-Heizelement. Über den Strömungskanal 13, der als Warmluftkanal bezeichnet wird, und stromabwärts des Heizkörpers 6 gelegen ist, gelangt erwärmte Luft als Warmluftstrom 16 nach Passieren der Mischkammeröffnung 19 in die Mischkammer 17. Die Mischkammeröffnungen (14,19) für Kalt- und Warmluft sind unmittelbar benachbart zueinander angeordnet.

Die Mischklappe 8 ist zwischen zwei Endpositionen bewegbar und bestimmt durch ihre Stellung das Verhältnis zwischen dem durch die Mischkammeröffnung 14 in die Mischkammer eintretenden Kaltluftstrom 15 und dem durch die Mischkammeröffnung 19 in die Mischkammer eintretenden Warmluftstrom 16. Damit wird die sich einstellende Temperatur, der sich ergebenden Mischluft in der Mischkammer 17 gesteuert bzw. geregelt.

Von der Mischkammer 17 abgehend befinden sich mehrere Luftaustrittskanäle 11, wobei jedem dieser Kanäle eine Schaltklappe 12 zugeordnet ist, durch welche die Größe des Luftstroms in den entsprechenden Luftaustrittskanälen 11 steuer- oder regelbar ist.

In Fig.1 ist die Mischklappe 8 in einer ersten Endposition dargestellt, wobei sie den Durchtritt des Warmluftstroms 16 durch die Mischkammeröffnung 19 verschließt. Der gesamte aus dem Verdampfer 4 austretende Luftstrom wird als Kaltluftstrom 15 über die Mischkammeröffnung 14 in die Mischkammer 17 geleitet.

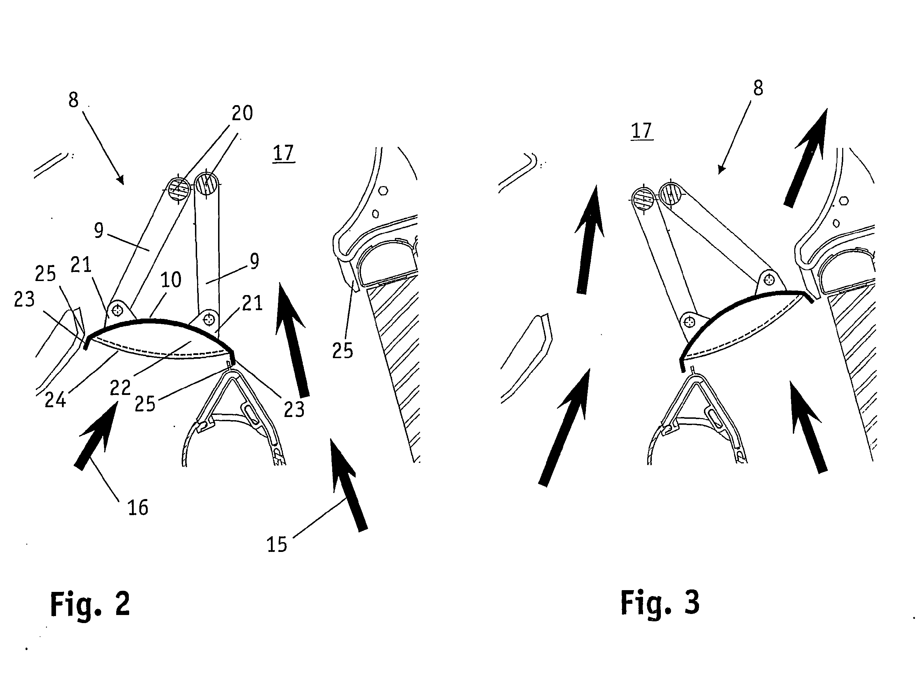

Eine vergrößerte Querschnittsansicht der Mischklappe 8 und eines Teilbereichs der Klimatisierungseinrichtung 1 mit derselben Klappenstellung wie in Fig.1 ist in Fig.2 dargestellt. Die Positionierung und Bewegung der Mischklappe 8 erfolgt über zwei Anlenkmittel 9, die in Form von Hebelarmen ausgeführt sind. Die Hebelarme weisen voneinander beabstandete, bezüglich des Gehäuses 2, ortsfeste Drehachsen 20 auf. An den, den Drehachsen 20 gegenüberliegenden Enden der Hebelarme, sind diese gelenkig mit dem Wandbereich 10, beispielsweise über an den Wandbereich 10 angespritzte Laschen 21 verbunden. Im dargestellten Ausführungsbeispiel sind die als Hebelarme ausgeführten Anlenkmittel 9 gleich lang ausgebildet.

Der Wandbereich 10 weist im Querschnitt, ein bezüglich der Drehachsen 20 konkav gekrümmtes Profil auf, das sich in Längsrichtung (senkrecht zur Zeichenebene) der Mischklappe erstreckt. An den beiden Stirnflächen der Mischklappe 17 befinden sich Abschluss- oder Stirnwandungen 22, an deren Außenseiten ein Steg 24 anschließt, um eine seitliche Abdichtung der Mischklappe 8 zum Gehäuse 2 in den Endpositionen zu gewährleisten. Beidseitig angrenzend an den Wandbereich 10 befinden Anschlagsflächen 23, die über die gesamte Länge der Mischklappe 8 durchgehend ausgeführt sind und in den Endpositionen dichtend an entsprechend ausgebildeten Anschlagsflächen 25 am Gehäuse 2 der Klimatisierungseinrichtung 1 anliegen. Vorzugsweise sind die Anschlagsflächen 23 mit einer entsprechenden fluiddichten Beschichtung, beispielsweise einem Schaummaterial oder einer elastischen, angespritzen Dichtlippe versehen.

Fig.3 zeigt die Mischklappe 8 in einer zweiten Endposition, wobei sie den Durchtritt des Kaltluftstroms 15 durch die Mischkammeröffnung 14 verschließt. Der gesamte aus dem Verdampfer 5 austretende Luftstrom wird über den Heizkörpereintrittskanal 18, den Heizkörper 6, dem Zuheizer 7 als Warmluftstrom 13 in die Mischkammer 17 geleitet. Die Anschlagsflächen 23 an der Mischklappe 8, sowie die Anschlagsflächen 25 am Gehäuse 2 sorgen auch in dieser zweiten dargestellten Endposition für eine Abdichtung des Kaltlufteintrittsbereichs.

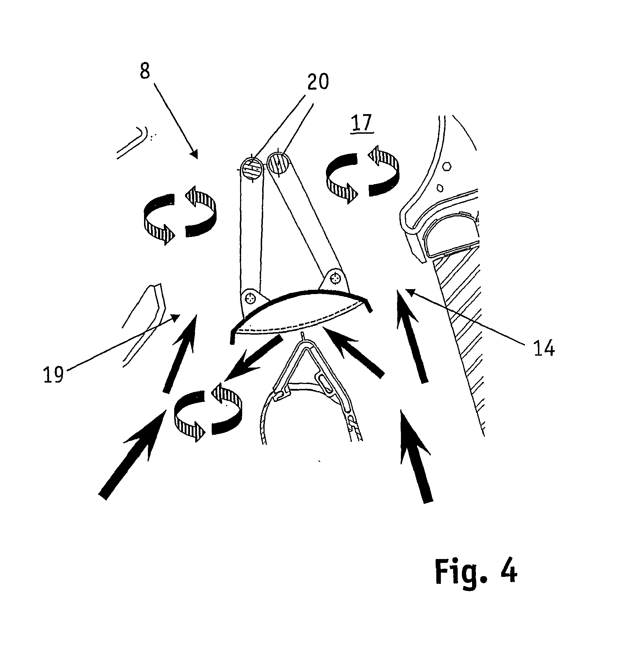

In Fig. 4 ist die Mischklappe 8 in einer Zwischenstellung dargestellt. Weder die Mischkammeröffnung 14 für den Kaltluftstrom 15 noch die Mischkammeröffnung 19 für den Warmluftstrom 16 sind vollständig verschlossen oder geöffnet. Anhand der gezeichneten Pfeile ist der Strömungsweg des aus dem Verdampfer 5 kommenden Luftstroms ersichtlich. Der Kaltluftstrom 15 teilt sich dabei auf in einen ersten Teilstrom, der direkt in die Mischkammer 17 gelangt und einen zweiten Teilstrom, der über den Wandbereich 10 der Mischklappe 8 in den Warmluftkanal 13 umgelenkt wird, wo er sich mit dem Teilluftstrom 13, der den Heizkörper 6 passiert hat, durchmischt. Durch die strömungsgünstig ausgeführte Form des Wandbereichs 10, ist wie aus Fig. 4 ersichtlich, eine sanfte Umlenkung des kalten Teilstromes möglich.

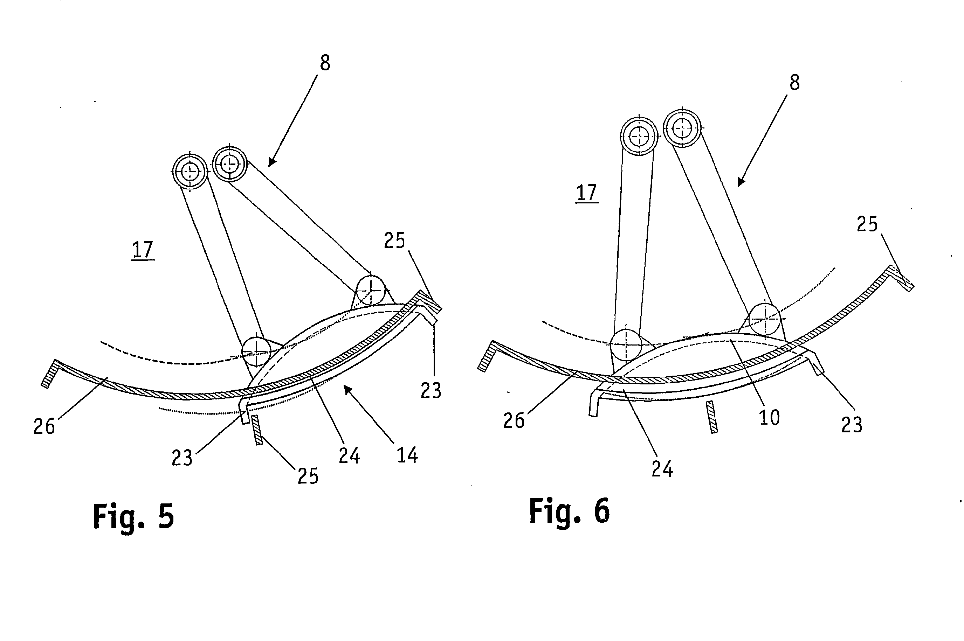

Mittels der Figuren 5 und 6 soll der Verlauf der Bewegung einer erfindungsgemäßen Mischklappe 8 illustriert werden. Ausgehend von einer ersten Endposition in der sowohl die Anschlagsflächen 23 der Mischklappe 8 dichtend an den Gehäuseanschlägen 25 anliegen, erfolgt auch eine Abdichtung der Mischkammeröffnung 14 mittels des kreisringsegmentförmig ausgeführten Dichtungsstegs 24 und einem dazu korrespondierenden an der Gehäusewandung ausgebildeten Dichtungsstegs 26 an der Stirnseiten der Mischklappe 8. Vorzugsweise ist der Steg 24 mit einer entsprechenden fluiddichten Beschichtung, beispielsweise einem Schaummaterial oder einer elastischen, angespritzten Dichtlippe versehen. Erfolgt eine Bewegung der Mischklappe von dieser Endposition in die in Fig. 6 dargestellte Mittelstellung so ist ersichtlich, dass insbesondere der Wandbereich 10 eine von einer reinen Rotation abweichende, aus einer Translation und Rotation zusammengesetzte Bewegung vollführt. Dadurch kommt es zu einem Abheben oder einem Ausweichen nach unten des Dichtungsstegs 24 vom sich ortsfest am Gehäuse befindlichen Steg 26. Da diese Stege (24,26) als Dichtkanten oder Dichtflächen fungieren und im Laufe der Bewegung sich weiter voneinander entfernen, vermindert sich auch die Reibung zwischen ihnen bzw. einer an die Mischklappe 8 angebrachten oder angespritzten Dichtlippe mit dem Gehäuse, was zur Folge hat, dass für die Bewegung der Mischklappe 8 ein geringeres Drehmoment nötig ist, als bei einem, im Falle einer reinen Drehbewegung, konstanten Abstand zwischen den Stegen (24,26). Nachdem durch die Form des Wandbereichs 10 und den Bewegungsablauf in den Zwischenstellungen der Mischklappe 8 ohnehin die Möglichkeit geschaffen wird, für einen direkten Durchtritt von Kaltluft in den Warmluftkanal 13 ist die stirnseitige Dichtigkeit der Mischklappe 8 in den Zwischenstellungen nicht erforderlich. Entscheidend ist vielmehr, dass sich das für die Bewegung notwendige Drehmoment verringert und trotzdem die Dichtfunktion in den beiden Endpositionen erhalten bleibt.

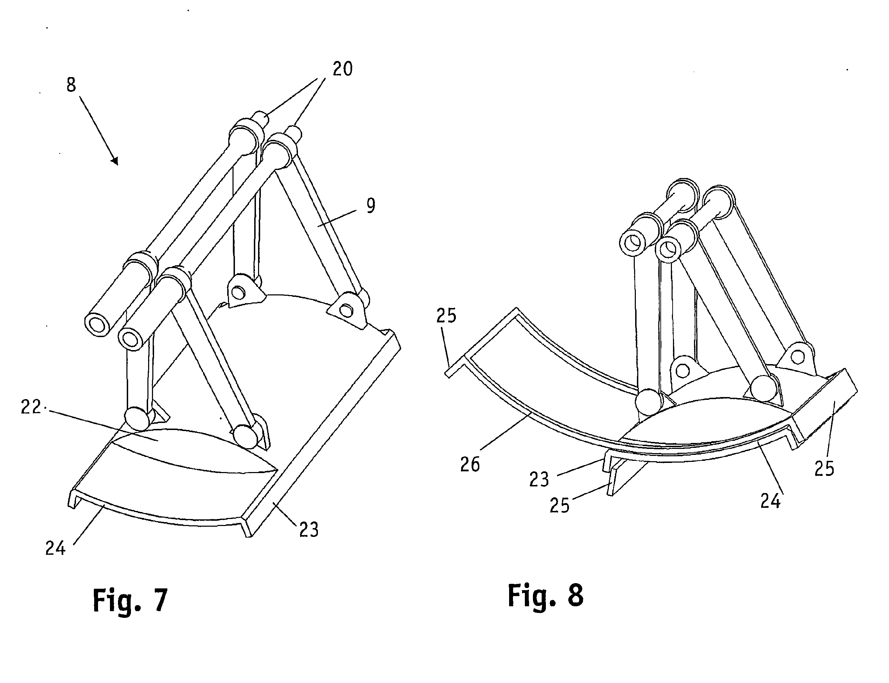

Weitere perspektivische Ansichten einer erfindungsgemäßen Mischklappe 8 finden sich in den Figuren 7 und 8. Verdeutlicht wird nochmals die Anlenkung einer Mischklappe 8, im gezeigten Ausführungsbeispiel über vier Anlenkmittel 9, die als Hebelarme ausgeführt sind und die jeweils paarweise eine gemeinsame Drehachse 20 aufweisen. Der Wandbereich 10 der Mischklappe 8 ist lateral in zwei unterschiedlich gekrümmte Abschnitte geteilt um beispielsweise in einem ersten Bereich der Mischkammer 17 eine gute Durchmischung kalter und warmer Teilluftströme zu erreichen und in einem zweiten Bereich eine stärkere Temperaturschichtung in der Mischkammer beziehungsweise in den von dieser abgehenden Luftkanälen 11 zu erzielen. Als Verbindung zwischen den unterschiedlich gekrümmten Bereichen des Wandbereichs 10, dient im Prinzip eine versetzte Stirnwand 22.

In Fig. 8 sind die Dichtungsstege 26 des Gehäuses 2 und die Gehäuseanschlagsflächen 25 perspektivisch zu sehen. Die Dichtfunktion der Mischklappe 8 ergibt sich wie oben beschrieben aus dem Zusammenwirken mit den Dichtungsstegen 24 und Anschlagsflächen 23 der Mischklappe 8.

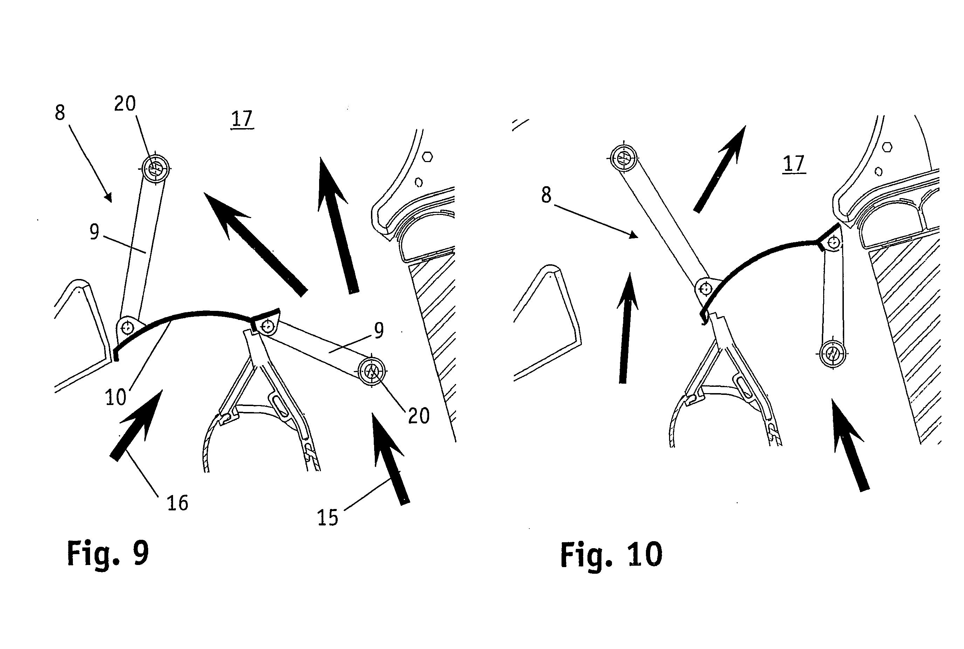

Ein Ausführungsbeispiel einer weiteren erfindungsgemäßen Variante ist in den Figuren 9 bis 12 gezeigt. Im Unterschied zu den in den Figuren 2 bis 8 gezeigten Ausführungsformen, sind die Drehachsen 20 der Anlenkmittel 9 wesentlich weiter voneinander beabstandet. Im gezeigten Beispiel liegt eine erste Drehachse 20 im Bereich der Mischkammer 17 und eine zweite Drehachse 20 im Bereich des Kaltluftstroms 15 stromaufwärts der Mischkammeröffnung 14. Die Hebelarme der Anlenkmittel 9 sind unterschiedlich lang ausgebildet.

Analog Fig. 2 zeigt Fig. 9 die Mischklappe 8 in einer ersten Endposition, wobei sie den Durchtritt des Warmluftstroms 16 durch die Mischkammeröffnung 19 verschließt. Der gesamte aus dem Verdampfer 4 austretende Luftstrom wird als Kaltluftstrom 15 über die Mischkammeröffnung 14 in die Mischkammer 17 geleitet.

Fig. 10 zeigt in Entsprechung zu Fig.3 die Mischklappe 8 in einer zweiten Endposition, wobei sie den Durchtritt des Kaltluftstroms 15 durch die Mischkammeröffnung 14 verschließt. Der gesamte aus dem Verdampfer 5 austretende Luftstrom wird über den Heizkörpereintrittskanal 18, den Heizkörper 6, dem Zuheizer 7 als Warmluftstrom 16 in die Mischkammer 17 geleitet.

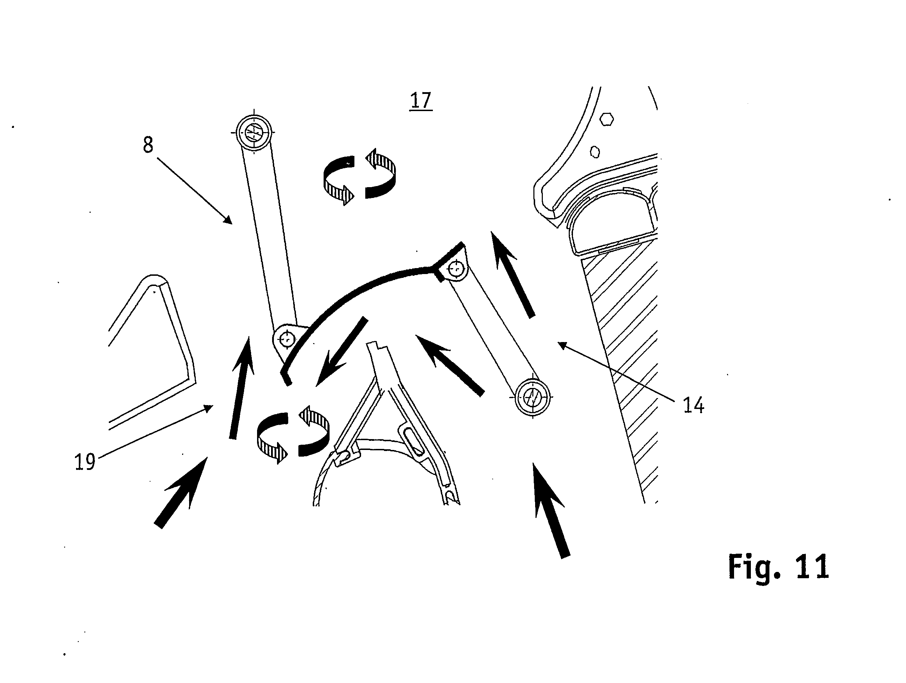

In Fig.11 ist angelehnt an die Darstellung in Fig. 4 die Mischklappe 8 in einer Zwischenstellung gezeigt. Weder die Mischkammeröffnung 14 für den Kaltluftstrom 15 noch die Mischkammeröffnung 19 für den Warmluftstrom 16 sind vollständig verschlossen oder geöffnet. Anhand der eingezeichneten Pfeile ist der Strömungsweg des aus dem Verdampfer 5 kommenden Luftstroms ersichtlich. Der Kaltluftstrom 15 teilt sich dabei auf in einen ersten Teilstrom, der direkt in die Mischkammer 17 gelangt und einen zweiten Teilstrom, der über den Wandbereich 10 der Mischklappe 8 in den Warmluftkanal 13 umgelenkt wird, wo er sich mit dem Teilluftstrom, der den Heizkörper 6 passiert hat, durchmischt. Durch die strömungsgünstig ausgeführte Form des Wandbereichs 10, ist wie aus Fig. 4 ersichtlich, eine sanfte Umlenkung des kalten Teilstromes möglich.

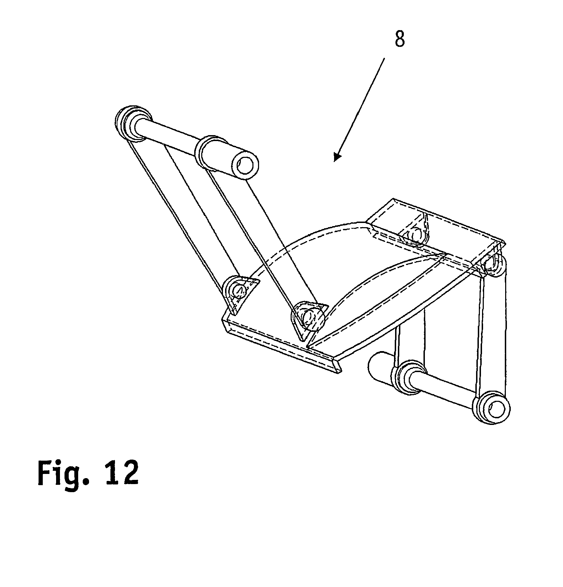

Fig. 12 zeigt in perspektivischer Darstellung eine Mischklappe 8 gemäß den Schnittbildern der Figuren 9 bis 11. Auch hier ist nochmals die Anlenkung einer Mischklappe 8, im gezeigten Ausführungsbeispiel über vier Anlenkmittel 9, die als Hebelarme ausgeführt sind und die jeweils paarweise eine gemeinsame Drehachse 20 aufweisen, dargestellt. Der Wandbereich 10 der Mischklappe 8 ist lateral in zwei unterschiedlich gekrümmte Abschnitte, geteilt um beispielsweise in einem ersten Bereich der Mischkammer 17 eine gute Durchmischung kalter und warmer Teilluftströme zu erreichen und in einem zweiten Bereich eine stärkere Temperaturschichtung in der Mischkammer beziehungsweise in den von dieser abgehenden Luftkanälen 11 zu erzielen. Als Verbindung zwischen den unterschiedlich gekrümmten Bereichen des Wandbereichs 10, dient im Prinzip eine versetzte Stirnwand 22.

Für die in den Figuren 9 bis 12 dargestellte Ausführungsform der Mischklappe erfolgt die Bewegung zwischen den zwei Endpositionen ebenfalls in Form einer aus einer Rotation und Translation zusammengesetzten Mischform. Die Abweichung von einer Rotationsbewegung ist wesentlich größer als beispielsweise bei dem in Fig. 7 dargestellten Ausführungsbeispiel. Durch die Variation der Anordnung der im Gehäuse 2 ortsfesten Drehachsen 20, der Anlenkmittel 9 und der Länge der Hebelarme, kann die Mischklappe 8 optimal auf die jeweiligen Anforderungen des gewünschten Mischungsverhältnisses aus warmer und kalter Luft bzw. der Querschnittsfläche für den direkten Durchtritt der kalten Luftströmung in den Warmluftkanal 8 während der Öffnungs- bzw. Schließbewegung abgestimmt werden. Ebenso kann eine Anpassung auf Bauraumvorgaben oder -beschränkungen erfolgen.

### Bezugszeichenliste

- 1: Heizungs- und/oder Klimatisierungseinrichtung
- 2: Gehäuse
- 3: Gebläse
- 4: Filter
- 5: Verdampfer
- 6: Heizkörper
- 7: Zuheizer
- 8: Mischklappe
- 9: Anlenkmittel (Hebel)
- 10: Wandbereich
- 11: Luftkanäle
- 12: Steuerklappen
- 13: Warmluftkanal
- 14: Mischkammeröffnung - Kaltluft
- 15: Kaltluftstrom
- 16: Warmluftstrom
- 17: Mischkammer
- 18: Heizkörpereintrittskanal
- 19: Mischkammeröffnung - Warmluft
- 20: Drehachse
- 21: Lasche
- 22: Stirnwandung
- 23: Anschlagsfläche - Mischklappe
- 24: Dichtungssteg - Klappe
- 25: Anschlagsfläche - Gehäuse
- 26: Dichtungssteg - Gehäuse

## Patentansprüche

1. Heizungs- und/oder Klimatisierungseinrichtung (1) für Fahrzeuge, mit einem Gehäuse (2), einem Gebläse (3), mindestens einem Heizkörper (6), gegebenenfalls einem in Strömungsrichtung vor dem Heizkörper (6) angeordneten Verdampfer (5), einen Zuluftstrom, der vor dem Eintritt in eine Mischkammer (17) in zumindest einen ersten Teilluftstrom (15) und zumindest einen zweiten Teilluftstrom (16) aufteilbar ist, wobei der zumindest erste Teilluftstrom (15) direkt oder über einen Luftkanal in die Mischkammer (17) mündet und der zumindest zweite Teilluftstrom (16) über den Heizkörper (6) geführt und über einen Warmluftkanal (13) in die Mischkammer (17) mündet, mit mehreren von der Mischkammer (17) ausgehenden Luftkanälen (11) und/oder Luftstromsteuermitteln (12), sowie mit zumindest einer Mischklappe (8) mit einem Wandbereich (10), die zwischen einer ersten und einer zweiten Endposition bewegbar ist, wobei in der ersten Endposition der Wandbereich (10) der Mischklappe (8) die Öffnung (14) für den Eintritt des zumindest ersten Teilluftstroms (15) in die Mischkammer (17) vollständig verschließt und in einer zweiten Endposition der Wandbereich (10) der Mischklappe (8) die Öffnung (19) für den Eintritt des zumindest zweiten Teilluftstroms (16) in die Mischkammer (17) vollständig verschließt, wobei in den, den Endpositionen der Mischklappe (8) zwischengelagerten Positionen der Wandbereich (10) der Mischklappe (8) einen direkten Durchtritt des zumindest ersten Teilluftstroms (15) in den Warmluftkanal (13) ermöglicht**dadurch gekennzeichnet, dass** die Mischklappe (8) über zumindest zwei Anlenkmittel (9) bewegbar ist, die jeweils an einer bezüglich des Gehäuses (2) ortsfesten Achse (20) drehbar gelagert sind, wobei die Achsen (20) voneinander beabstandet sind, dass während der Bewegung der Mischklappe (8), zumindest ein Teilbereich, insbesondere der Wandbereich (10), der Mischklappe (8), eine aus einer Rotation und einer Translation zusammengesetzte Bewegung vollführt.

2. Heizungs- und/oder Klimatisierungseinrichtung nach einem der vorangehenden Ansprüche, **dadurch gekennzeichnet, dass** die zumindest zwei Anlenkmittel (9) der Mischklappe (8) in Form von Hebelarmen ausgebildet sind.

3. Heizungs- und/oder Klimatisierungseinrichtung nach einem der vorangehenden Absprüche, **dadurch gekennzeichnet, dass** die Mischklappe (8) Mittel (21) zur gelenkigen Verbindung der zumindest zwei Anlenkmittel mit der Mischklappe aufweist.

4. Heizungs- und/oder Klimatisierungseinrichtung nach einem der vorangehenden Ansprüche, **dadurch gekennzeichnet, dass** zumindest zwei Anlenkmittel (9) der Mischklappe (8) gleich lang ausgebildet sind.

5. Heizungs- und/oder Klimatisierungseinrichtung nach einem der vorangehenden Ansprüche, **dadurch gekennzeichnet, dass** zumindest zwei Anlenkmittel (9) der Mischklappe (8) unterschiedlich lang ausgebildet sind.

6. Heizungs- und/oder Klimatisierungseinrichtung nach einem der vorangehenden Ansprüche, **dadurch gekennzeichnet, dass** die Drehachsen (20) der Anlenkelemente (9) der Mischklappe (8) im Bereich der Mischkammer (17) liegen.

7. Heizungs- und/oder Klimatisierungseinrichtung nach einem der vorangehenden Ansprüche, **dadurch gekennzeichnet, dass** zumindest die Drehachse (20) eines ersten Anlenkelements (9) der Mischklappe (8) im Bereich der Mischkammer (17) liegt und die Drehachse (20) eines zweiten Anlenkelements (9) der Mischklappe (8) im Bereich des ersten oder zweiten Teilluftstroms (15, 16) liegt.

8. Heizungs- und/oder Klimatisierungseinrichtung nach einem der vorangehenden Ansprüche, **dadurch gekennzeichnet, dass** der Wandbereich (10) der Mischklappe (8) im Querschnitt zumindest teilweise kreis- oder kreissegmentförmig ausgeführt ist.

9. Heizungs- und/oder Klimatisierungseinrichtung nach einem der vorhergehenden Ansprüche, **dadurch gekennzeichnet, dass** der Wandbereich (10) der Mischklappe (8) zumindest teilweise in elliptischer, parabolischer, hyperbolischer oder einer anderen stetig gekrümmten Form ausgebildet ist.

10. Heizungs- und/oder Klimatisierungseinrichtung nach einem der vorangehenden Ansprüche, **dadurch gekennzeichnet, dass** der Wandbereich (10) der Mischklappe (8) zumindest teilweise als ebenes Flächenstück ausgeführt ist.

11. Heizungs- und/oder Klimatisierungseinrichtung nach einem der vorangehenden Ansprüche, **dadurch gekennzeichnet, dass** der Wandbereich (10) der Mischklappe (8) lateral getrennte, insbesondere unterschiedlich gekrümmte Bereiche aufweist.

12. Heizungs- und/oder Klimatisierungseinrichtung nach einem der vorangehenden Ansprüche, **dadurch gekennzeichnet, dass** die Mischklappe (8) einen in seiner gesamten Fläche durchgehend stetigen Wandbereich aufweist.

13. Heizungs- und/oder Klimatisierungseinrichtung nach einem der vorangehenden Ansprüche, **dadurch gekennzeichnet, dass** die Mischklappe (8) einen einstückigen Wandbereich (10) aufweist.

14. Heizungs- und/oder Klimatisierungseinrichtung nach einem der vorangehenden Ansprüche, **dadurch gekennzeichnet, dass** das Gehäuse (2) zumindest einen Endanschlag (25) für zumindest eine Endposition der Mischklappe aufweist.

15. Heizungs- und/oder Klimatisierungseinrichtung nach einem der vorangehenden Ansprüche, **dadurch gekennzeichnet, dass** der Wandbereich (10) der Mischklappe (8) zumindest eine Anschlag oder eine Anschlagsfläche (23) für zumindest eine Endposition der Mischklappe aufweist.

16. Heizungs- und/oder Klimatisierungseinrichtung nach einem der vorangehenden Ansprüche, **dadurch gekennzeichnet, dass** der Wandbereich (10) der Mischklappe (8) an seinem Umfang ein Dichtmittel aufweist.

17. Heizungs- und/oder Klimatisierungseinrichtung nach einem der vorangehenden Ansprüche, **dadurch gekennzeichnet, dass** das Dichtmittel als eine angespritzte oder angeschäumte Dichtlippe ausgebildet ist.

18. Heizungs- und/oder Kümatisierungseinrichtung nach einem der vorangehenden Ansprüche, **dadurch gekennzeichnet, dass** das Gehäuse zumindest in einer der Endpositionen der Mischklappe (8) mit Dichtkanten (24) im Bereich der Stirnseiten des Wandbereichs (10) der Mischklappe ausgebildet ist.

19. Heizungs- und/oder Klimatisierungseinrichtung nach einem der vorangehenden Ansprüche, **dadurch gekennzeichnet, dass** die Dichtkanten in Form von Stegen (26) oder vorspringenden Bereichen am Gehäuse (2) ausgebildet sind.

## Claims

1. A heating and/or air conditioning unit (1) for vehicles, having a housing (2), a fan (3), at least one heating element (6), optionally an evaporator (5) which is arranged in front of the heating element (6) in the flow direction, an inlet air flow which can be divided into at least one first part air flow (15) and at least one second part air flow (16) before entry into a mixing chamber (17), the at least first part air flow (15) opening into the mixing chamber (17) directly or via an air duct and the at least second part air flow (16) being guided via the heating element (6) and opening into the mixing chamber (17) via a warm air duct (13), having a plurality of air ducts (11) which emanate from the mixing chamber (17) and/or air flow control means (12), and having at least one mixing flap (8) having a wall region (10) which can be moved between a first and a second end position, the wall region (10) of the mixing flap (8) closing the opening (14) for the entry of the at least first part air flow (15) into the mixing chamber (17) completely in the first end position, and the wall region (10) of the mixing flap (8) closing the opening (19) for the entry of the at least second part air flow (16) into the mixing chamber (17) completely in a second end position and making direct passage possible of the at least first part air flow (15) into the warm air duct (13) in the positions which are situated in between the endpositions, **characterized in that** the mixing flap (8) can be moved via at least two articulation means (9) which are mounted rotatably in each case on an axis (20) which is stationary with respect to the housing (2), the axes (20) being spaced apart from one another in such a way that, during the movement of the mixing flap (8), at least one part region, in particular the wall region (10), of the mixing flap (8) performs a movement which is composed of a rotation and a translation.

2. The heating and/or air conditioning unit as claimed in one of the preceding claims, **characterized in that** the at least two articulation means (9) of the mixing flap (8) are configured in the form of lever arms.

3. The heating and/or air conditioning unit as claimed in one of the preceding claims, **characterized in that** the mixing flap (8) has means (21) for the articulated connection of the at least two articulation means to the mixing flap.

4. The heating and/or air conditioning unit as claimed in one of the preceding claims, **characterized in that** at least two articulation means (9) of the mixing flap (8) are configured with identical lengths.

5. The heating and/or air conditioning unit as claimed in one of the preceding claims, **characterized in that** at least two articulation means (9) of the mixing flap (8) are configured with different lengths.

6. The heating and/or air conditioning unit as claimed in one of the preceding claims, **characterized in that** the rotational axes (20) of the articulation elements (9) of the mixing flap (8) lie in the region of the mixing chamber (17).

7. The heating and/or air conditioning unit as claimed in one of the preceding claims, **characterized in that** at least the rotational axis (20) of a first articulation element (9) of the mixing flap (8) lies in the region of the mixing chamber (17) and the rotational axis (20) of a second articulation element (9) of the mixing flap (8) lies in the region of the first or second part air flow (15, 16).

8. The heating and/or air conditioning unit as claimed in one of the preceding claims, **characterized in that** the wall region (10) of the mixing flap (8) is of at least partial circular or circular segment shape in cross section.

9. The heating and/or air conditioning unit as claimed in one of the preceding claims, **characterized in that** the wall region (10) of the mixing flap (8) is configured at least partially in an elliptic, parabolic, hyperbolic or another continuously curved shape.

10. The heating and/or air conditioning unit as claimed in one of the preceding claims, **characterized in that** the wall region (10) of the mixing flap (8) is configured at least partially as a flat surface piece.

11. The heating and/or air conditioning unit as claimed in one of the preceding claims, **characterized in that** the wall region (10) of the mixing flap (8) has laterally divided regions, in particular of different curvature.

12. The heating and/or air conditioning unit as claimed in one of the preceding claims, **characterized in that** the mixing flap (8) has a wall region which is continuously constant over its entire surface area.

13. The heating and/or air conditioning unit as claimed in one of the preceding claims, **characterized in that** the mixing flap (8) has a single-piece wall region (10).

14. The heating and/or air conditioning unit as claimed in one of the preceding claims, **characterized in that** the housing (2) has at least one end stop (25) for at least one end position of the mixing flap.

15. The heating and/or air conditioning unit as claimed in one of the preceding claims, **characterized in that** the wall region (10) of the mixing flap (8) has at least one stop or one stop face for at least one end position of the mixing flap.

16. The heating and/or air conditioning unit as claimed in one of the preceding claims, **characterized in that** the wall region (10) of the mixing flap (8) has a sealing means on its circumference.

17. The heating and/or air conditioning unit as claimed in one of the preceding claims, **characterized in that** the sealing means is configured as a sealing lip which is injection molded or foamed onto said sealing means.

18. The heating and/or air conditioning unit as claimed in one of the preceding claims, **characterized in that** the housing is configured, at least in one of the end positions of the mixing flap, with sealing edges (24) in the region of the end sides of the wall region (10) of the mixing flap.

19. The heating and/or air conditioning unit as claimed in one of the preceding claims, **characterized in that** the sealing edges are configured in the form of webs (26) or protruding regions on the housing (2).

## Revendications

1. Dispositif de chauffage et / ou de climatisation (1) pour des véhicules, comprenant un carter (2), un ventilateur (3), au moins un radiateur (6), le cas échéant un évaporateur (5) disposé en amont du radiateur (6) dans la direction d'écoulement, un flux d'alimentation d'air qui, avant d'entrer dans une chambre de mélange (17), peut être réparti en au moins un premier flux d'air partiel (15) et au moins un deuxième flux d'air partiel (16), où le premier flux d'air partiel (15), au moins au nombre de un, débouche directement, ou via un conduit d'air, dans la chambre de mélange (17), et le deuxième flux d'air partiel (16), au moins au nombre de un, est guidé via le radiateur (6) et débouche dans la chambre de mélange (17) via un conduit d'air chaud (13), dispositif comprenant plusieurs conduits d'air (11) sortant de la chambre de mélange (17) et / ou des moyens de commande de flux d'air (12), comprenant également au moins un volet mélangeur (8) comportant une zone de séparation (10), volet mélangeur qui est mobile entre une première et une deuxième position de fin de course où, dans la première position de fin de course, la zone de paroi (10) du volet mélangeur (8) ferme complètement l'ouverture (14) prévue pour l'entrée, dans la chambre de mélange (17), du premier flux d'air partiel (15) au moins au nombre de un, et, dans une deuxième position de fin de course, la zone de paroi (10) du volet mélangeur (8) ferme complètement l'ouverture (19) prévue pour l'entrée, dans la chambre de mélange (17), du deuxième flux partiel (16) au moins au nombre de un, où, dans les positions intermédiaires entre les positions de fin de course du volet mélangeur (8), la zone de paroi (10) du volet mélangeur (8) permet, dans le conduit d'air chaud (13), un passage direct du premier flux d'air partiel (15) au moins au nombre de un, **caractérisé en ce que** le volet mélangeur (8) est mobile par au moins deux moyens articulés (9) qui, à chaque fois, sont montés en rotation sur un axe fixe (20), par rapport au carter (2), où les axes (20) sont espacés l'un de l'autre, de manière telle qu'au cours du mouvement du volet mélangeur (8), au moins une zone partielle, en particulier la zone de paroi (10), du volet mélangeur (8) exécute un mouvement composé d'une rotation et d'une translation.

2. Dispositif de chauffage et / ou de climatisation selon la revendications 1, **caractérisé en ce que** les moyens articulés (9) du volet mélangeur (8) au moins au nombre de deux sont configurés sous la forme de bras de levier.

3. Dispositif de chauffage et / ou de climatisation selon l'une ou l'autre des revendications précédentes, **caractérisé en ce que** le volet mélangeur (8) présente des moyens (21) servant à la liaison articulée des moyens articulés, au moins au nombre de deux, avec le volet mélangeur.

4. Dispositif de chauffage et / ou de climatisation selon l'une quelconque des revendications précédentes, **caractérisé en ce qu'**au moins deux moyens articulés (9) du volet mélangeur (8) sont configurés de longueur identique.

5. Dispositif de chauffage et / ou de climatisation selon l'une quelconque des revendications précédentes, **caractérisé en ce qu'**au moins deux moyens articulés (9) du volet mélangeur (8) sont configurés de longueur différente.

6. Dispositif de chauffage et / ou de climatisation selon l'une quelconque des revendications précédentes, **caractérisé en ce que** les axes de rotation (20) des éléments articulés (9) du volet mélangeur (8) se trouvent dans la zone de la chambre de mélange (17).

7. Dispositif de chauffage et / ou de climatisation selon l'une quelconque des revendications précédentes, **caractérisé en ce qu'**au moins l'axe de rotation (20) d'un premier élément articulé (9) du volet mélangeur (8) se trouve dans la zone de la chambre de mélange (17), et l'axe de rotation (20) d'un deuxième élément articulé (9) du volet mélangeur (8) se trouve dans la zone du premier ou du deuxième flux d'air partiel (15, 16).

8. Dispositif de chauffage et / ou de climatisation selon l'une quelconque des revendications précédentes, **caractérisé en ce que** la zone de paroi (10) du volet mélangeur (8) est réalisée, au moins partiellement, en ayant en section une forme de cercle ou de segment de cercle.

9. Dispositif de chauffage et / ou de climatisation selon l'une quelconque des revendications précédentes, **caractérisé en ce que** la zone de paroi (10) du volet mélangeur (8) est configurée, au moins partiellement, en ayant une forme elliptique, parabolique, hyperbolique ou une autre forme toujours incurvée.

10. Dispositif de chauffage et / ou de climatisation selon l'une quelconque des revendications précédentes, **caractérisé en ce que** la zone de paroi (10) du volet mélangeur (8) est réalisée, au moins partiellement, comme une pièce de surface plane.

11. Dispositif de chauffage et / ou de climatisation selon l'une quelconque des revendications précédentes, **caractérisé en ce que** la zone de paroi (10) du volet mélangeur (8) présente des zones séparées latéralement, en particulier des zones incurvées de façon différente.

12. Dispositif de chauffage et / ou de climatisation selon l'une quelconque des revendications précédentes, **caractérisé en ce que** le volet mélangeur (8) présente une zone de paroi toujours continue sur toute sa surface.

13. Dispositif de chauffage et / ou de climatisation selon l'une quelconque des revendications précédentes, **caractérisé en ce que** le volet mélangeur (8) présente une zone de paroi (10) formant une pièce d'un seul tenant.

14. Dispositif de chauffage et / ou de climatisation selon l'une quelconque des revendications précédentes, **caractérisé en ce que** le carter (2) présente au moins une butée d'extrémité (25) pour au moins une position de fin de course du volet mélangeur.

15. Dispositif de chauffage et / ou de climatisation selon l'une quelconque des revendications précédentes, **caractérisé en ce que** la zone de paroi (10) du volet mélangeur (8) présente au moins une butée ou une surface de butée (23) pour au moins une position de fin de course du volet mélangeur.

16. Dispositif de chauffage et / ou de climatisation selon l'une quelconque des revendications précédentes, **caractérisé en ce que** la zone de paroi (10) du volet mélangeur (8) présente, sur sa circonférence, un moyen d'étanchéité.

17. Dispositif de chauffage et / ou de climatisation selon l'une quelconque des revendications précédentes, **caractérisé en ce que** le moyen d'étanchéité est conçu comme une lèvre d'étanchéité moulée par injection ou expansée.

18. Dispositif de chauffage et / ou de climatisation selon l'une quelconque des revendications précédentes, **caractérisé en ce que** le carter, au moins dans l'une des positions de fin de course du volet mélangeur (8), est conçu en comportant des arêtes d'étanchéité (24) dans la zone des faces frontales de la zone de paroi (10) du volet mélangeur.

19. Dispositif de chauffage et / ou de climatisation selon l'une quelconque des revendications précédentes, **caractérisé en ce que** les arêtes d'étanchéité, sur le carter (2), sont configurées sous la forme de parties pleines (26) ou de zones saillantes.
